# EUROPÄISCHE PATENTSCHRIFT

(11) **EP 2 397 377 B1**
(45) Veröffentlichungstag und Bekanntmachung des Hinweises auf die Patenterteilung: **23.10.2013**
(21) Anmeldenummer: 11169061.6
(22) Anmeldetag: 08.06.2011
(51) Int. Cl.: B60R 21/38

(54) **Scharnier für eine Fronthaube eines Kraftwagens sowie Verfahren zum Betätigen eines solchen Scharniers**
Hinge for the bonnet of a motor vehicle and method for actuating such a hinge
Charnière pour un capot avant d'un véhicule automobile et procédé d'actionnement d'une telle charnière

(30) Priorität: 18.06.2010 DE 102010030274
(43) Veröffentlichungstag der Anmeldung: 21.12.2011
(73) Patentinhaber: Bayerische Motoren Werke Aktiengesellschaft, 80809 München (DE); Edscha Engineering GmbH, 42855 Remscheid (DE)
(72) Erfinder: Koestler, Ulrich, 85241 Hebertshausen (DE); Lubowicki, Jan, 42327 Wuppertal (DE)
(74) Vertreter: Sieger, Erich

(56) Entgegenhaltungen:
- WO-A1-2007/115693
- DE-A1- 10 033 148
- DE-A1-102005 022 924
- DE-U1-202009 010 054

## Beschreibung

Die Erfindung betrifft ein Scharnier für eine Fronthaube eines Kraftwagens der im Oberbegriff des Patentanspruchs 1 angegebenen Art sowie ein Verfahren zum Betätigen eines solchen Scharniers der im Oberbegriff des Patentanspruchs 16 angegebenen Art.

Derartige Scharniere sind aus dem Stand der Technik bekannt. Die DE 20 2009 010 054 U1 offenbart einen Scharnierbeschlag für eine Fronthaube eines Kraftfahrzeugs mit einem Stellhebel, welcher auf Seiten der Karosserie an einem Auflager und auf Seiten der Fronthaube an einem weiteren Auflager angelenkt ist. Der Stellhebel ist dabei durch ein auftrennbares Verbindungsmittel fest mit dem Auflager auf Seiten der Fronthaube verbunden, wobei zwischen dem Auflager auf Seiten der Karosserie und dem Auflager auf Seiten der Fronthaube ein auf das Auflager auf Seiten der Fronthaube wirkender Aktor angeordnet ist, mittels welchem das Auflager auf Seiten der Fronthaube in eine Personenschutzstellung schwenkbar ist. An dem Stellhebel ist ein Arretierungsmittel vorgesehen, mittels welchem das aus der Personenschutzstellung in eine Grundstellung zurückbewegte Auflager auf Seiten der Fronthaube mit dem Stellhebel verriegelbar ist. Das Arretierungsmittel ist dabei als Blattfeder ausgebildet, welche mit einem ersten Endbereich unverlierbar am Stellhebel gehalten ist und deren zweiter, zum Auflager auf Seiten der Fronthaube gerichteter Endbereich abgewinkelt ist, wobei das Auflager auf Seiten der Fronthaube eine Rastausnehmung aufweist, in welche die Blattfeder mit ihrem zweiten Endbereich rastend einsteckbar ist.

Aus der DE 10 2005 022 924 A1 ist ein Scharnier für eine Frontklappe eines Personenkraftwagens bekannt, welches einen ersten Scharnierschenkel mit einem ersten Befestigungsabschnitt zum Befestigen an der Frontklappe sowie einen zweiten Scharnierschenkel mit einem zweiten Befestigungsabschnitt zum Befestigen an der Karosserie des Personenkraftwagens aufweist. Die beiden Scharnierschenkel weisen jeweils Anlenkabschnitte auf, die derart miteinander gelenkverbunden sind, dass die Scharnierschenkei aus einer, einer geschlossenen Stellung der Frontklappe entsprechenden ersten Winkelstellung der Anlenkabschnitte zueinander in eine, einer Offenstellung der Frontklappe entsprechenden zweiten Winkelstellung verschwenkbar sind. Der Winkel zwischen den Anlenkabschnitten ändert sich dabei stetig in eine Richtung. Des Weiteren ist eine Hubvorrichtung vorgesehen, deren Betätigung in der geschlossenen Stellung der Frontklappe den ersten Befestigungsabschnitt vom zweiten Befestigungsabschnitt derart beabstandet, dass die Frontklappe angehoben wird. Der Winkel ändert sich bei der Hubbetätigung in dieselbe Richtung. Um die Frontklappe anzuheben, wird eine Klinke geöffnet, wodurch sich eine Blattfeder entspannen kann.

Die bekannten Scharniere weisen eine nur unzureichende Funktionserfüllung auf, insbesondere über eine hohe Lebensdauer mit hohen Belastungen hinweg.

Des Weiteren sind die Scharniere toleranzempfindlich, was insbesondere auf das Scharnier mit der Klinke zutrifft. Daraus resultieren unterschiedliche Auslösekräfte und/oder unterschiedliche Auslösewege, was die Funktionserfüllung ebenso negativ beeinträchtigt.

Es ist daher Aufgabe der vorliegenden Erfindung, ein Scharnier der eingangs genannten Art sowie ein Verfahren zum Betätigen eines solchen Scharniers bereitzustellen, welche eine sehr gute Funktionserfüllung aufweisen.

Diese Aufgabe wird durch ein Scharnier für eine Fronthaube eines Kraftwagens mit den Merkmalen des Patentanspruchs 1 sowie durch ein Verfahren zum Betätigen eines solchen Scharniers mit den Merkmalen des Patentanspruchs 17 gelöst. Vorteilhafte Ausgestaltungen mit zweckmäßigen und nicht-trivialen Weiterbildungen der Erfindung sind in den abhängigen Ansprüchen angegeben.

Ein solches Scharnier für eine Fronthaube eines Kraftwagens umfasst ein erstes Scharnierteil sowie zumindest ein zweites Scharnierteil, welche gelenkig miteinander verbunden und zwischen und einer Normalstellung und einer Schutzstellung relativ zueinander bewegbar sind. Das Scharnier umfasst ferner eine Halteeinrichtung, mittels welcher die Scharnierteile in der Normalstellung gehalten sind, sowie zumindest eine Betätigungseinrichtung, mittels welcher eine Bewegung der Scharnierteile von der Normalstellung in die Schutzstellung bewirkbar ist.

Erfindungsgemäß ist vorgesehen, dass die Scharnierteile in der Normalstellung mittels der Halteeinrichtung unter Beaufschlagung mit einer Haltekraft zwischen den Scharnierteilen gegenseitig fixiert sind, wobei die Haltekraft der Halteeinrichtung zwischen den Scharnierteilen aufhebbar ist, bevor eine Bewegung der Scharnierteile relativ zueinander erfolgt. Zum einen bedeutet dies, dass die Haltekraft zum Fixieren der Scharnierteile in der Normalstellung, welche in eine oder mehrere Raumrichtungen, insbesondere in einer Ebene, wirken kann, relativ zueinander zwischen den Scharnierteilen wirkt, wodurch die Scharnierteile besonders fest gegenseitig in der Normalstellung zu fixieren sind. Somit sind die Scharnierteile nicht über eine lange Stütz- und Kraftkette in der Normalstellung gehalten, sondern gegeneinander fixiert. Diese besonders feste, gegenseitige Fixierung der Scharnierteile wirkt sich positiv auf die Funktionserfüllung des Scharniers aus, da die feste, gegenseitige Fixierung der Scharnierteile somit auch hohe, gegebenenfalls auch wechselnde Belastungen auch über eine hohe Lebensdauer des Scharniers hinweg ertragen und somit das Scharnier seine Funktion dauerhaft erfüllen kann, nämlich einerseits ein Öffnen und Schließen der Fronthaube zu ermöglichen als auch im Falle eines Unfalls mit einem Fußgänger die Schutzstellung einnehmen zu können. In dieser Schutzstellung ist die Fronthaube insbesondere in einem in Fahrzeuglängsrichtung hinteren Kantenbereich das heißt im Bereich einer A-Säule des Kraftwagens, angehoben, wodurch eine Kollision des Fußgängers mit in Fahrzeughochrichtung unterhalb der Fronthaube angeordneten und gegebenenfalls Verletzungen verursachenden Teilen vermieden ist.

Zum anderen ist die sehr gute Funktionserfüllung des erfindungsgemäßen Scharniers dadurch realisiert, dass die Haltekraft zunächst aufhebbar ist, bevor die Bewegung der Scharnierteile relativ zueinander zum Einnehmen der Schutzstellung erfolgt. Bei dem erfindungsgemäßen Scharnier erfolgt somit keine gleichzeitige Aufhebung der Haltekraft und Bewegung der Scharnierteile relativ zueinander, sondern die Vorgänge zum Aufheben der Haltekraft und zum Bewegen der Scharnierteile relativ zueinander sind vielmehr voneinander entkoppelt. Somit können einerseits die Scharnierteile in der Normalstellung sehr fest gegenseitig fixiert sein. Andererseits kann ein notwendiger Aufwand, insbesondere eine Betätigungskraft, zum Bewirken der Bewegung der Scharnierteile relativ zueinander gering gehalten werden. Durch diese Funktionstrennung ist die Wahrscheinlichkeit einer Fehlfunktion des Scharniers sehr gering, insbesondere über eine hohe Lebensdauer des Scharniers hinweg. Des Weiteren ermöglicht diese Funktionstrennung eine sehr genaue Auslegung und Berechnung der notwendigen Bauteile des Scharniers, was die Funktionserfüllung des Scharniers weiterhin positiv beeinflusst.

Ein weiterer Vorteil ist, dass ein gegebenenfalls vorhandenes Stellglied der Betätigungseinrichtung zum Bewirken der Bewegung der Scharnierteile relativ zueinander sehr gering sowohl bezüglich dessen Ausmaße als auch dessen Leistung dimensioniert werden kann, was den Bauraumbedarf des Scharniers, die Kosten, das Gewicht sowie den Energiebedarf in einem geringen Rahmen hält. Dies löst oder vermeidet Package-Probleme, insbesondere in einem platzkritischen Bereich wie dem einer Fronthaube. Das geringe Gewicht trägt zu einem geringen Gesamtgewicht des Kraftwagens bei, was mit einem geringen Kraftstoffverbrauch sowie geringen CO₂-Emissione einhergeht.

Bei dem erfindungsgemäßen Scharnier ist somit mit anderen Worten die Haltekraft zunächst aufhebbar und zeitlich anschließend die Scharnierteile in die Schutzstellung bewegbar. Aufgrund der Funktionstrennung kann dabei vorteilhafterweise die Aufhebung der Haltekraft sowie zeitlich anschließend die Bewegung der Scharnierteile in die Schutzstellung mittels ein und desselben Stellglieds erfolgen, welches beispielsweise als pyrotechnischer Aktor ausgebildet ist, der zunächst die Haltekraft aufhebt und anschließend die Scharnierteile relativ zueinander in die Schutzstellung bewegt und somit die Fronthaube anhebt. Ebenso kann vorgesehen sein, dass mittels des Stellglieds zunächst die Haltekraft aufhebbar ist, wonach eine Bewegung der Scharnierteile in die Schutzstellung beispielsweise durch Entspannung einer vorgespannten Feder erfolgt.

Weiterhin möglich ist, dass die Betätigungseinrichtung zwei Stellglieder umfasst, von welchen zunächst ein Stellglied die Haltekraft aufhebt, wonach zeitlich anschließend das andere Stellglied die Scharnierteile in die Schutzstellung bewegt. In jeglicher Hinsicht ist das erfindungsgemäße Scharnier durch die direkt zwischen den Scharnierteilen wirkende Haltekraft, mittels welcher die Scharnierteile gegenseitig fixiert sind, sowie die Funktionstrennung zwischen dem Aufheben der Haltekraft und der Bewegung der Scharnierteile unempfindlich gegenüber Toleranzen, so dass beispielsweise im Rahmen einer Serienfertigung des erfindungsgemäßen Scharniers über eine Vielzahl von erfindungsgemäßen Scharnieren hinweg Betätigungskräfte und/oder Betätigungswege zur Aufhebung der Haltekraft sowie zum Bewegen der Scharnierteile zumindest im Wesentlichen gleich sind. Somit erfüllt jedes der Scharnierteile seine Funktion in gleichem, sehr gutem Maße.

Die Betätigungseinrichtung kann zumindest eine Anschlagsfläche umfassen, welche beispielsweise an einem der Scharnierteile angeordnet ist und mittels welcher die Bewegung in die Schutzstellung bewirkbar ist, indem zum Beispiel das gegebenenfalls vorgesehene Stellglied auf die Anschlagsfläche wirkt.

Das Stellglied als pyrotechnischer Aktor ermöglicht eine besonders schnelle Bewegung der Fronthaube bzw. der Scharnierteile in die Schutzstellung. Anderweitige Ausführungsformen des Stellglieds, so beispielsweise ein elektromechanischer Aktor, ein elektrisch betätigter Aktor, ein federkrafkbetätigter Aktor und/oder dergleichen sind ohne weiteres möglich.

Die Bewegung der Scharnierteile von der Normalstellung in die Schutzstellung ist dabei mittels der Betätigungseinrichtung bei und/oder zeitlich vor einer unfallbedingten Kraftbeaufschlagung des Kraftwagens bzw. der Fronthaube bewirkbar. Dabei erfasst beispielsweise eine Erfassungseinrichtung einen Aufprall oder einen bevorstehenden, aufgrund einer aktuellen Fahrsituation unvermeidbaren Aufprall eines Fußgängers auf die Fronthaube, wodurch die Bewegung der Scharnierteile ausgelöst und die Fronthaube aufgestellt wird.

Zur Erfindung gehört auch ein Verfahren zum Betätigen eines Scharniers für eine Fronthaube eines Kraftwagens, mit einem ersten Scharnierteil und mit zumindest einem zweiten, mit dem ersten Scharnierteil gelenkig verbundenen Scharnierteil, welche zwischen einer Normalstellung und einer Schutzstellung relativ zueinander bewegbar sind, wobei die Scharnierteile mittels einer Halteeinrichtung in der Normalstellung gehalten sind. Bei dem Verfahren wird eine Bewegung der Scharnierteile von der Normalstellung in die Schutzstellung mittels zumindest einer Betätigungseinrichtung bewirkt, wobei erfindungsgemäß vorgesehen ist, dass eine Haltekraft zwischen den Scharnierteilen, unter deren Beaufschlagung die Scharnierteile in der Normalstellung mittels der Halteeinrichtung gegenseitig fixiert sind, aufgehoben wird, bevor eine Bewegung der Scharnierteile zueinander erfolgt und gegebenenfalls bewirkt wird. Vorteilhafte Ausgestaltungen des erfindungsgemä-βen Scharniers sind als vorteilhafte Ausgestaltungen des erfindungsgemäßen Verfahrens und umgekehrt anzusehen.

Auch durch das erfindungsgemäße Verfahren ist eine Funktionstrennung realisiert, bei welcher Vorgänge zum Aufheben der Haltekraft von Vorgängen zur Bewegung der Scharnierteile relativ zueinander entkoppelt sind. Dies geht mit den in diesem Zusammenhang bereits geschilderten Vorteilen einher, dass das Scharnier eine sehr gute Funktionserfüllung auch über eine sehr hohe Lebensdauer mit gegebenenfalls hohen, insbesondere wechselnden Belastungen hinweg, aufweist. Das erfindungsgemäße Verfahren ermöglicht es somit, zunächst die besonders feste und definierte, gegenseitige Fixierung der Scharnierteile in der Normalstellung aufzuheben, wodurch sich diese anschließend nur unter Aufwendung einer als gering zu beziffernden Betätigungskraft in die Schutzstellung bewegen können. Dabei kann vorgesehen sein, dass die Scharnierteile mittels zumindest eines Stellglieds der Betätigungseinrichtung mittels welchem auch die Haltekraft aufgehoben wird bzw. wurde, in die Schutzstellung bewegt werden, oder dass lediglich die Fixierung aufgehoben wird, und sich die Scharnierteile infolge einer Kraftbeaufschlagung beispielsweise durch ein vorgespanntes Federelement relativ zueinander in die Schutzstellung bewegen.

In einer vorteilhaften Ausführungsform der Erfindung sind die Scharnierteile in der Normalstellung mittels der Halteeinrichtung durch eine kraftschlüssige Verbindung, insbesondere ausschließlich durch eine solche kraftschlüssige Verbindung, gegenseitig fixiert. Eine solche kraftschlüssige Verbindung birgt den Vorteil, dass sie zum einen eine besonders feste und langlebige, gegenseitige Fixierung in der Normalstellung erlaubt, was zu einer sehr guten Funktionserfüllung des Scharniers führt. Zum anderen kann die Haltekraft zwischen den Scharnierteilen durch eine solche kraftschlüssige Verbindung unaufwändig, schnell und mit einer nur geringen Betätigungskraft aufgehoben werden. Dies ermöglicht eine besonders schnelle Bewegung des Scharniers von der Normalstellung in die Schutzstellung, was dem Fußgängerschutz zuträglich ist.

Vorteilhafterweise sind die Scharnierteile durch die Haltekraft miteinander verspannt und somit gegenseitig fixiert. Dies ist der besonders festen, gegenseitigen Fixierung der Scharnierteile zuträglich, so dass diese nicht über eine lange Kraft- und Abstützkette in der Normalstellung gehalten sind.

In einer Ausführungsform der Erfindung umfasst die Halteeinrichtung zumindest ein Halteelement, mittels welchem die Scharnierteile in der Normalstellung gegenseitig fixiert sind, wobei das Halteelement beispielsweise als Schraubelement ausgebildet ist, mittels welchem die Scharnierteile in der Normalstellung miteinander verspannt sind. Ein solches Halteelement birgt den Vorteil, dass die gegenseitige Fixierung und damit die Haltekraft zwischen den Scharnierteilen besonders schnell aufzuheben ist zur schnellen Bewegung der Scharnierteile in die Schutzstellung.

Bei einem solchen Halteelement der Halteeinrichtung kann es sich beispielsweise um einen Bolzen, einen Niet oder dergleichen handeln, welcher zur Aufhebung der Haltekraft zerstört wird. Dabei wird das Halteelement beispielsweise abgeschert, durchtrennt, gebrochen, geschnitten, gesprengt oder gebogen, wonach die Bewegung der Scharnierteile relativ zueinander erfolgen kann. Dies bedeutet eine besonders schnelle und effiziente Aufhebung der Haltekraft zur zeitnahen Darstellung des Fußgängerschutzes durch die Bewegung der Scharnierteile in die Schutzstellung.

Ebenso kann es sich bei dem Halteelement um eine U-förmige Zwinge, eine Klammer, ein Federelement, einen Kniehebelspanner, eine Nocke, ein Exzenter, eine Schnecke, eine Evolvente, eine Kreiskeil-Verbindung oder dergleichen handeln, wobei die Haltekraft, welche durch das Halteelement bewirkt wird, bezogen auf das Halteelement zerstörungsfrei aufhebbar ist. Dies bedeutet beispielsweise, dass das als Schraube ausgebildete Halteelement, mittels welchem die Scharnierteile verschraubt und somit miteinander verspannt sind, lose gedreht wird, so dass keine Verspannkraft und somit keine Haltekraft mehr zwischen dem Scharnierteilen vorliegt. Dabei reicht bereits eine sehr geringe Drehung der Schraube in Drehrichtung, in welche die Schraube gelöst werden kann, aus, um die gegebenenfalls sehr hohe Halte- bzw. Verspannkraft zwischen den Scharnierteilen zu lösen und anschließend eine leichtgängige Bewegung der Scharnierteile relativ zueinander zu ermöglichen. Im Falle der Zwinge, der Klammer, des Federelements oder dergleichen kann das Halteelement auf einfache Art und Weise derart bewegt werden, dass es nicht mehr in Wirkverbindung mit dem Scharnierteilen steht und somit keine Haltekraft mehr zwischen den Scharnierteilen bewirkt, wodurch sich diese schnell und einfach relativ zueinander in die Schutzstellung bewegen können.

Ebenso möglich ist, die Scharnierteile mittels einer als hydraulische und/oder pneumatischer Halteeinrichtung ausgebildeten Halteeinrichtung in der Normalstellung zu halten. Dabei umfasst die Halteeinrichtung beispielsweise eine hydraulische und/oder pneumatisch wirkende oder betätigbare Kraftdose, die die Haltekraft bewirkt und mittels welcher die Haltekraft gegebenenfalls aufhebbar ist.

Ist die Haltekraft durch Drehen der Halteeinrichtung aufhebbar, so birgt dies den Vorteil, dass eine Drehbewegung auf engstem Raum durchführbar ist, da sie keinen translatorischen Bewegungsweg erfordert. Zudem kann durch eine solche Drehbewegung eine besonders hohe Haltekraft zwischen den Scharnierteilen auf einem nur geringen, rotatorischen Bewegungsweg aufgehoben werden.

In einer weiteren vorteilhaften Ausführungsform der Erfindung ist die Haltekraft durch Bewegen relativ zueinander schief verlaufender Kontaktflächen relativ zueinander aufhebbar. Derartige, schief zueinander verlaufende Kontaktflächen ermöglichen die Ausbildung einer sehr hohen Haltekraft und damit einer sehr festen Verspannung und gegenseitigen Fixierung der Scharnierteile sowie ein besonders schnelles Lösen dieser Haltekraft. Derartige, relativ zueinander schief verlaufende Kontaktflächen sind beispielsweise an konischen Elementen und/oder durch schiefe Ebenen ausgebildet, die relativ zueinander bewegt, beispielsweise gedreht, werden, wodurch die Haltekraft zwischen den Scharnierteilen aufhebbar ist.

Eine weitere Möglichkeit, eine besonders hohe Haltekraft zwischen den Scharnierteilen auszubilden sowie diese Haltekraft schnell zu lösen, ist, dass die Haltekraft durch Verkleinern einer Klemmlänge zur gegenseitigen Fixierung der Scharnierteile in der Normalsteflung aufhebbar ist. Dabei kann vorgesehen sein, dass die Haltekraft wiederum durch Drehen relativ zueinander schief verlaufender Flächen aufhebbar ist. Ebenso ist möglich, dass die Scharnierteile derartig gegenseitig fixiert und miteinander verspannt sind, dass zum Verspannen der Scharnierteile eine Klemmlänge bereitgestellt ist, über welche sich die Haltekraft abstützt. Wird diese Klemmlänge verkleinert, beispielsweise durch Zerstören eines oder zweier entsprechender Klemmelemente, so kann sich die Haltekraft nicht oder nur vermindert abstützen und die Verspannung zwischen den Scharnierteilen ist zumindest im Wesentlichen aufgehoben.

Zur Verkleinerung der Klemmlänge kann beispielsweise vorgesehen sein, dass die Scharnierteile über zwei, jeweilige Zähne aufweisende Verzahnungen gegenseitig fixiert und miteinander verspannt sind, wobei die Zähne der jeweiligen Verzahnungen in Richtung der Haltekraft aneinander abgestützt sind. Die jeweiligen Verzahnungen befinden sich zunächst nicht miteinander im Eingriff. Werden die Verzahnungen nun relativ zueinander verdreht, so werden die Verzahnungen in Eingriff miteinander verbracht, das heißt, Zähne der einen Verzahnungen greifen in Zahnlücken der anderen Verzahnung ein und umgekehrt, wodurch die Klemmlänge, welche durch die Verzahnungen bereitgestellt ist, um den Betrag der kleineren der beiden Längserstreckungen der Verzahnungen in Richtung der Haltekraft verkleinert wird. Ebenso ist es möglich, dass die Verzahnungen zerstört, beispielsweise gesprengt, werden, so dass die Klemmlänge verkleinert und die Haltekraft und damit die Verspannung zwischen den Scharnierteilen aufgehoben ist. Werden die Verzahnungen relativ zueinander verdreht oder gesprengt, so bewegen sich die Verzahnungen aufeinander zu und die Klemmlänge wird reduziert.

In einer weiteren, vorteilhaften Ausführungsform der Erfindung ist zwischen den Scharnierteilen eine reibungserhöhende Schicht vorgesehen, so dass zwischen den Scharnierteilen eine Reibkraft in der Normalstellung auftritt, die gegenüber einer Reibkraft erhöht ist, die vorliegen würde, wenn die Scharnierteile direkt, d.h. ohne Vermittlung der eine Reibung erhöhenden Schicht, aneinander anliegen würden. Dadurch ist eine erhöhte Haltekraft zwischen den Scharnierteilen dargestellt, wodurch die Scharnierteile in der Normalstellung wünschenswerterweise besonders fest und dauerhaft gehalten sind.

Zwischen der Halteeinrichtung, insbesondere dem Halteelement der Halteeinrichtung, und einer korrespondierenden Kontaktfläche kann dabei eine reibungsreduzierende Schicht vorgesehen sein, um die Betätigungskraft zum Aufheben der Haltekraft erwünscht gering zu halten. Ebenso vorteilhaft ist, eine Freigängigkeit vorzusehen, welche es erlaubt, dass sich zumindest eines der Scharnierteile bei der Bewegung in die Schutzstellung relativ zu der Halteeinrichtung bewegen kann. Zur gegenseitigen Fixierung der Halteteile durchdringt beispielsweise das Halteelement eine Durchgangsöffnung eines der Scharnierteile. Sollen sich die Scharnierteile in die Offenstellung bewegen, so kann es erforderlich sein, dass sich dieses Scharnierteil von der Halteeinrichtung, insbesondere dem Halteelement, wegbewegt, insbesondere wegschwenkt, so dass die Durchgangsöffnung vorteilhaft eine Nut, einen Schlitz oder dergleichen Freigängigkeit aufweist, damit die Halteeinrichtung an dem anderen Scharnierteil gehalten jedoch von dem einen Scharnierteil lösbar ist.

Weitere Vorteile, Merkmale und Einzelheiten der Erfindung ergeben sich aus der nachfolgenden Beschreibung mehrerer bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die geschilderten Ausführungsformen, Funktionen, die Funktionstrennung sowie Vorteile gelten dabei für ein erfindungsgemäßes Scharnier und sind ohne weiteres auf ein solches anwendbar, bei welchem beispielsweise ein mit der Fronthaube zu verbindendes Klappenteil als erstes Scharnierteil sowie ein Scharnieroberteil als zweites Scharnierteil vorgesehen sind. Dabei ist das Klappenteil relativ zu dem Scharnieroberteil in die Schutzstellung bewegbar. Das Scharnieroberteil ist beispielsweise über zumindest ein Hebelelement, über ein Viergelenk, Siebengelenk oder dergleichen an einem Scharnierunterteil als weiteres, drittes Scharnierteil relativ zu diesem bewegbar gehalten, wobei das Scharnierunterteil an der Karosserie des Kraftwagens zu befestigen ist.

Ebenso kann vorgesehen sein, dass das erfindungsgemäße Scharnier das Klappenteil, das Scharnieroberteil sowie das in Fahrzeughochrichtung darunter angeordnete Scharnierunterteil umfasst, wobei das Scharnieroberteil relativ zu dem Scharnierunterteil in die Schutzstellung bewegbar ist und das Scharnieroberteil und das Scharnierunterteil gegenseitig in einer Normalstellung fixiert sind. Das Scharnier kann als ein eingelenkiges, zwei-, vier-, sieben- oder mehrgelenkiges Scharnier ausgebildet sein.

Die Zeichnungen zeigen in
- Fig. 1: eine schematische Seitenansicht eines Scharniers für eine Fronthaube eines Kraftwagens in einer geschlossenen Stellung der Fronthaube,
- Fig. 2: eine schematische Seitenansicht des Scharniers gemäß Fig. 1 in einer geöffneten Stellung der Haube,
- Fig. 3: eine schematische Schnittansicht des Scharniers gemäß den vorhergehenden Figuren, wobei sich das Scharnier in einer Normalstellung befindet,
- Fig. 4: eine schematische Seitenansicht des Scharniers gemäß den vorhergehenden Figuren, wobei sich das Scharnier in einer Fußgängerschutzstellung befindet,
- Fig. 5: eine schematische Schnittansicht des Scharniers gemäß Fig. 4,
- Fig. 6: eine perspektivische Schnittansicht einer weiteren Ausführungsform eines Scharniers gemäß den vorhergehenden Figuren in einer Normalstellung,
- Fig. 7: eine schematische Schnittansicht des Scharniers gemäß Fig. 6 in einer Fußgängerschutzstellung,
- Fig. 8: eine schematische Schnittdarstellung einer weiteren Ausführungsform eines Scharniers gemäß den vorhergehenden Figuren in einer Normalstellung,
- Fig. 9: eine schematische Seitenansicht des Scharniers gemäß Fig. 8,
- Fig. 10: eine schematische Schnittansicht des Scharniers gemäß den Figuren 8 und 9 in einer Fußgängerschutzstellung,
- Fig. 11: eine schematische Seitenansicht des Scharniers gemäß Fig. 10,
- Fig. 12: eine schematische Perspektivansicht einer weiteren Ausführungsform eines Scharniers gemäß den vorhergehenden Figuren,
- Fig. 13: eine weitere, schematische Perspektivansicht des Scharniers gemäß Fig. 12,
- Fig. 14: ausschnittsweise eine schematische Perspektivansicht des Scharniers gemäß den Fig. 12 und 13,
- Fig. 15: ausschnittsweise eine schematische Perspektivansicht des Scharniers gemäß Fig. 14,
- Fig. 16: ausschnittsweise eine schematische Perspektivansicht des Scharniers gemäß den Fig. 14 und 15,
- Fig. 17: eine schematische Perspektivansicht eines Halteelements einer Halteeinrichtung des Scharniers gemäß den Fig. 14 bis 16 und
- Fig. 18: eine weitere, schematische Perspektivansicht des Halteelements gemäß Fig. 17.

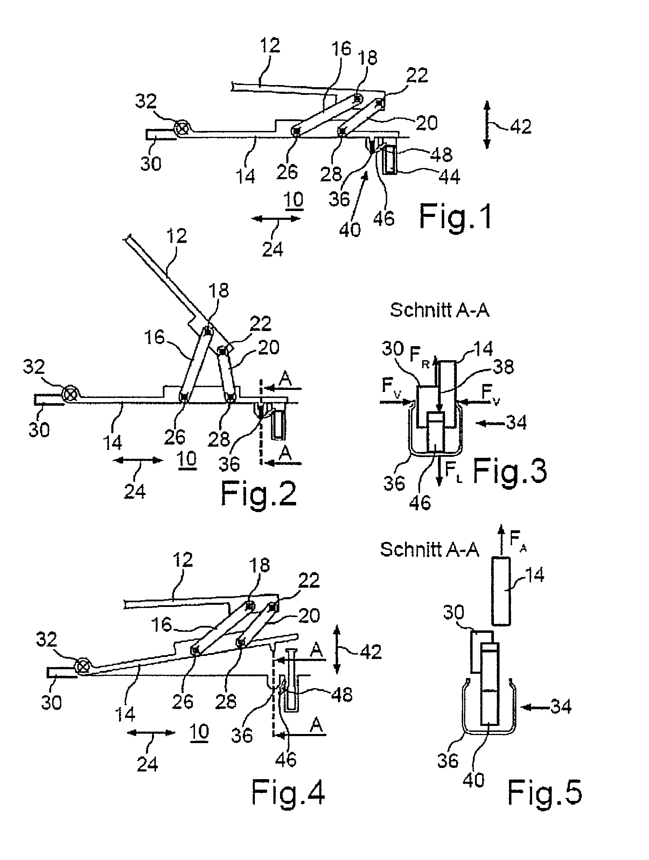

Die Fig. 1 zeigt ein Scharnier 10 für eine Fronthaube eines Personenkraftwagens, welches ein Scharnieroberteil 12 sowie ein Scharnierunterteil 14 umfasst. Das Scharnieroberteil ist mit einem ersten Lenkerelement 16 um eine Drehachse 18 drehbar sowie mit einem zweiten Lenkerelement 20 um eine weitere Drehachse 22 drehbar verbunden- Wie der Fig. 1 zu entnehmen ist, verlaufen die Lenkerelemente 16 und 20 in Längsrichtung des Personenkraftwagens gemäß einem Richtungspfeil 24 von vorne unten nach hinten oben, wobei das Lenkerelement 16 eine größere Erstreckung, d. h. Länge, aufweist als das Lenkerelement 22. Auch das Scharnierunterteil 14 ist sowohl mit dem Lenkerelement 16 um eine Drehachse 26 drehbar als auch mit dem Lenkerelement 20 um eine weitere Drehachse 28 drehbar verbunden, so dass durch die Drehachsen 18, 20, 26 und 28 sowie die Lenkerelemente 16 und 20 und das ScharnieroberLeil 12 sowie das Scharnierunterteil 14 ein viergelenkiges Scharnier 10 dargestellt ist, mittels welchem die Haube zwischen einer in der Fig. 1 gezeigten Schließstellung, in welcher sie einen Motorraum des Personenkraftwagens abdeckt, und zumindest einer in der Fig. 2 gezeigten, den Motorraum freigebenden Offenstellung verschwenkbar ist. Bei einer Verschwenkung der Fronthaube von der Schließstellung in die Offenstellung bewegt sich diese entlang der Längsrichtung des Personenkraftwagens gemäß dem Richtungspfeil 24 etwas nach vorne sowie nach oben und schwenkt aufgrund der unterschiedlichen Erstreckungen der Lenkerelemente 16 und 20 nach hinten auf. Das Scharnierunterteil 14 ist dabei mit einem weiteren Scharnierunterteil 30 um eine Drehachse 32 drehbar verbunden, wobei das Scharnierunterteil 30 als separat zu der Karosserie des Personenkraftwagens ausgebildetes Scharnierunterteil 30 oder aber einstückig mit der Karosserie ausgebildet und mit der Karosserie fest verbunden sein kann.

In einer in den Fig. 1 bis 3 gezeigten Normalstellung des Scharniers 10 bzw. der Scharnierunterteile 14 und 30 sind die Scharnierunterteile 14 und 30 mittels einer Halteeinrichtung 34 gehalten, die insbesondere anhand der Fig. 3 und 5 verdeutlicht ist. Die Halteeinrichtung 34 umfasst eine Klemme 36, die die Scharnierunterteile 14 und 30 unter Beaufschlagung mit einer Haltekraft Fᵥ gegenseitig fixiert und miteinander verspannt. Daher wird die Haltekraft Fᵥ auch als Verspannkraft Fᵥ bezeichnet. Mit anderen Worten drückt die Klemme 36 die Scharnierunterteile 14 und 30 gegeneinander zusammen, so dass in der Normalstellung das Scharnierunterteil 14 fest an dem Scharnierunterteil 30 und damit an die Karosserie gehalten ist. Dadurch, dass die Haltekraft Fᵥ direkt zwischen den Scharnierunterteilen 14 und 30 wirkt, sind die in der Normalstellung besonders fest gegeneinander fixiert. Dies ist dadurch unterstützt, dass zwischen den Scharnierunterteilen 14 und 30 zumindest bereichsweise eine Reibfläche 38 angeordnet ist, unter deren Vermittlung die Scharnierunterteile 14 und 30 zumindest bereichsweise aneinander anliegen. Die Reibfläche 38 kann dabei beispielsweise durch eine Oberflächenbearbeitung zumindest eines der Scharnierunterteile 14 und/oder 30, als separates und mit zumindest einem der Scharnierunterteile 14 und/oder 30 verbundenes Teil, als Beschichtung zumindest eines der Scharnierunterteile 14 und/oder 30 oder dergleichen ausgebildet sein. Eine solche Reibung erhöhende Schicht ist an dieser Stelle gewünscht, um eine besonders hohe Haltekraft Fᵥ und eine besonders feste und gegenseitige Fixierung der Scharnierunterteile 14 und 30 zu realisieren, wodurch diese auch bei hohen Belastungen über eine hohe Lebensdauer hinweg in der Normalstellung verbleiben.

Das Scharnier 10 umfasst ferner eine Betätigungseinrichtung 40, mittels welcher eine Bewegung der Scharnierunterteile 14 und 30 relativ zueinander von der in den Fig. 1 bis 3 gezeigten Normalstellung in eine in den Fig. 4 und 5 gezeigte Fußgängerschutzstellung bewirkbar ist. In dieser Fußgängerschutzstellung ist die Fronthaube in einem entlang der Fahrzeuglängsrichtung gemäß dem Richtungspfeil 24 hinteren Kantenbereich der Fronthaube in einem Bereich einer A-Säule des Personenkraftwagens angehoben, wodurch beispielsweise im Falle eines Unfalls mit einem Fußgänger dieser und insbesondere dessen Kopf mittels der Fronthaube abgefangen werden kann und somit vor einem Aufprall auf in Fahrzeughochrichtung gemäß einem Richtungspfeil 42 darunter liegende und Ver letzungen verursachende Bauteile geschützt ist.

Die Betätigungseinrichtung 40 umfasst einen Aktor 44, welcher beispielsweise pyrotechnisch betätigbar und zumindest im Wesentlichen in Fahrzeughochrichtung bewegbar ist. Wird beispielsweise mittels einer Erfassungseinrichtung ein Aufprall eines Fußgängers auf die Fronthaube erfasst oder ein drohender und aufgrund der aktuellen Fahrsituation des Personenkraftwagens unvermeidbarer Aufprall eines Fußgängers auf die Fronthaube vorhergesehen bzw. vorauserfasst, so wird der Aktor 44 betätigt, wodurch dieser von einer in der Fig. 1 gezeigten eingefahrenen Stellung in eine in der Fig. 4 gezeigte, ausgefahrene Stellung in Fahrzeughochrichtung nach oben bewegt wird. Bei der Bewegung des Aktors 44 trifft dieser zunächst auf einen Hebel 46 der Betätigungseinrichtung 40, wobei der Hebel 46 um eine Drehachse 48 drehbar gehalten ist. Trifft der Aktor 44 diesseits der Drehachse 48 auf den Hebel 46 auf, so wird dieser um die Drehachse 48 gedreht, wobei der Hebel 46 jenseits der Drehachse 48 mit der Klemme 36 zusammenwirkt. Ein so bewirktes Drehen des Hebels 46 bewirkt wiederum ein Abziehen, ein Öffnen oder dergleichen der Klemme 36, wodurch diese keine oder lediglich eine stark verminderte Haltekraft Fᵥ auf die Scharnierunterteile 14 und 30 aufbringt, so dass die Scharnierunterteile 14 und 30 nicht mehr oder weniger stark miteinander verspannt und damit gegenseitig fixiert sind.

Der Fig. 3 zu entnehmen ist, dass bei Reduzierung oder gar Entfall der Haltekraft Fᵥ eine Reibkraft F_{R} ebenso reduziert wird oder gar entfällt, welche aus der Haltekraft Fᵥ und der Reibfläche 38 resultiert.

Wie insbesondere den Fig. 4 und 5 zu entnehmen ist, wirkt der Aktor 44 zeitlich nach Betätigung des Hebels 46 zum Aufheben oder zumindest Reduzieren der Haltekraft Fᵥ auf das Scharnierunterteil 14, wodurch dieses um die Drehachse 32 relativ zu dem Schamierunterteil 30 gedreht und in die Fußgängerschutzstellung angehoben wird. Dabei übt der Aktor 44 auf das Scharnierunterteil 14 eine Aufstellkraft F_{A} aus.

Dadurch, dass mittels des Aktors 44 zunächst die Haltekraft Fᵥ aufgehoben oder zumindest reduziert wird und, erst zeitlich anschließend das Scharnierunterteil 14 mittels des Aktors 44 bewegt wird, muss der Aktor 44 zunächst erst eine Lösekraft F_{L} zum Lösen der Klemme 36 und erst danach die Aufstellkraft F_{A} aufbringen. Dies bedeutet eine Funktionstrennung zum Aufheben der Verspannung der Scharnierunterteile 14 und 30 miteinander sowie zum Bewegen der Scharnierteile 14 und 30 relativ zueinander.

Das Scharnier 10 ermöglicht damit nicht nur eine besonders feste, gegenseitige Fixierung der Scharnierunterteile 14 und 30 auch über eine sehr hohe Lebensdauer mit sehr hohen Belastungen hinweg, sondern ist infolge der Verspannung der Scharnierunterteile 14 und 30 sowie der geschilderten Funktionstrennung unempfindlich gegenüber Toleranzen, so dass es eine sehr gute Funktionserfüllung auch über eine sehr hohe Lebensdauer hinweg aufweist.

Durch das Bewegen der Scharnierunterteile 14 und 30 von der Normalstellung in die Schutzstellung wird aus dem vormals viergelenkigen Scharnier 10 ein fünfgelenkiges Scharnier mit der nun entfesselten Drehachse 32. Zur Darstellung einer definierten Kinematik sowie einer definierten Schutzstellung existiert eine weitere Drehachse, wobei die in den Fig. 1 bis 5 nicht dargestellte Fronthaube mit dem Scharnieroberteil 12 verbunden und in einem Haubenschloss gehalten ist. Das Haubenschloss ist in Fahrzeuglängsrichtung gemäß dem Richtungspfeil 24 weiter vorne als das Scharnier 10 angeordnet. Dabei ist die Fronthaube in dem Haubenschloss derart gehalten, dass sich die Fronthaube um eine durch das Haubenschloss und die Fronthaube gebildete Drehachse drehen und somit die Bewegung des Scharniers 10 in die Fußgängerschutzstellung mit ausführen kann. Vorteilhafterweise ermöglicht das Haubenschloss auch eine zumindest geringe translatorische Bewegung der Fronthaube entlang der Fahrzeuglängsrichtung. Durch diese Zwangskinematik wird somit infolge der Betätigung des Scharnierunterteils 14 und dessen Bewegung relativ zum Scharnierunterteil 30 auch das Scharnieroberteil 12 relativ zum Scharnierunterteil 14 bzw. zum Scharnierunterteil 30 bewegt.

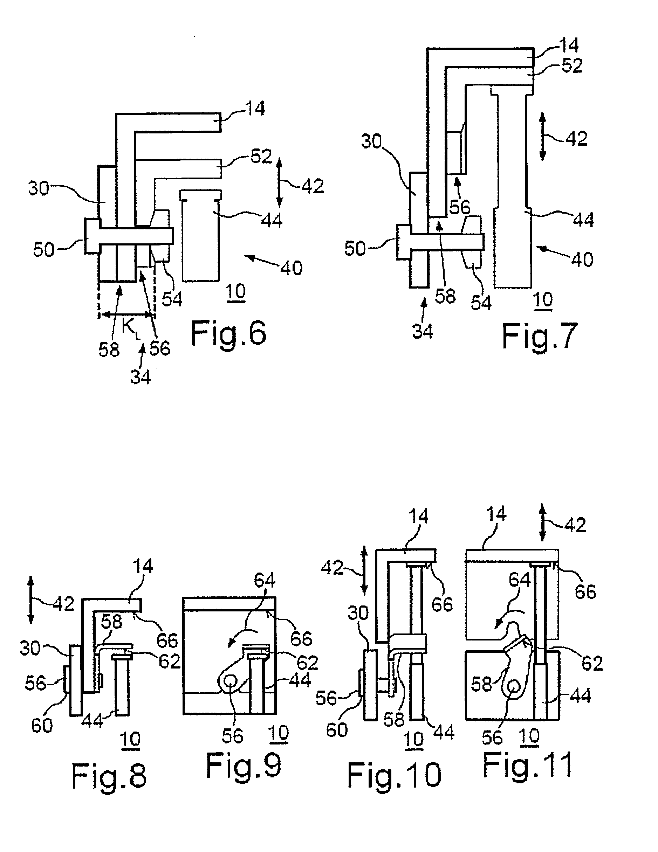

Die Fig. 6 und 7 zeigen eine weitere Ausführungsform eines Scharniers 10 gemäß den Fig. 1 bis 5, wobei das Scharnier 10 in der Fig. 6 in einer Normalstellung und in der Fig. 7 in einer Fußgängerschutzstellung dargestellt ist. Auch das Scharnier 10 gemäß den Fig. 6 und 7 umfasst das Scharnierunterteil 14 und das Scharnierunterteil 30, welche in der Normalstellung mittels der Halteeinrichtung 34 gegenseitig fixiert sind, indem sie miteinander verspannt sind. Im Gegensatz zur Halteeinrichtung 34 des Scharniers 10 gemäß den vorhergehenden Figuren umfasst das Scharnier 10 gemäß den Fig. 6 und 7 eine Schraube 50, die das Scharnierunterteil 30, das Scharnierunterteil 14 sowie einen Keil 52 der Halteeinrichtung 34 durchdringt. Gekontert ist die Schraube 50 durch eine Mutter 54 der Halteeinrichtung 34, die auf ein Gewinde der Schraube 12 aufgeschraubt ist. Die Scharnierunterteile 14 und 30 sind dabei mittels der Schraube 50, der Mutter 54 sowie des Keils 34 miteinander verspannt, wobei durch die Scharnierunterteile 30 und 14 sowie den Keil 52 eine Klemmlänge K_{L} dargestellt ist, über welche sich die Verspannkraft zum Verspannen der Scharnierunterteile 14 und 30 abstützt. Mit anderen Worten sind die Scharnierunterteile 14 und 30 sowie der Keil 52 als Verbund miteinander verspannt.

Zum Bewegen der Scharnierunterteile 14 und 30 von der in der Fig. 6 gezeigten Normalstellung in die in der Fig. 7 gezeigte Fußgängerschutzstellung fährt der Aktor 44 der Betätigungseinrichtung 40 wie schon in Zusammenhang mit den Fig. 1 bis 5 geschildert in Fahrzeughochrichtung gemäß dem Richtungspfeil 42 aus und wirkt zunächst mit dem Keil 52 derart zusammen, dass der Keil 52 durch die Betätigung des Aktors 44 aus dem Verbund hinausgezogen bzw. -gedrückt wird. Dabei gleitet der Keil 52 einerseits an der Mutter 54 und andererseits an dem Scharnierunterteil 14 ab, bis der Keil 52 die Mutter 54 nicht mehr kontaktiert. Dann kann sich die Haltekraft nicht mehr über die gesamte in der Fig. 6 dargestellte Klemmlänge K_{L} über den Verbund aus den Scharnierunterteilen 14 und 30 sowie dem Keil 52 abstützen. Durch Herausziehen bzw. -drücken des Keils 52 aus dem Verbund ist die Klemmlänge K_{L} verkleinert. Da die Mutter 54 die verkleinerte Klemmlänge K_{L} nicht kompensieren kann, indem sie beispielsweise in Richtung des Scharnierunterteils 14 rutscht und somit das Scharnierunterteil 14 mit dem Scharnierunterteil 30 ohne Vermittlung des Keils 52 verspannt, ist die Haltekraft zwischen den Scharnierunterteilen 14 und 30 aufgehoben, so dass diese nicht mehr miteinander verspannt sind. Wie schon bei dem Abziehen der Klemme 36 können dann die Scharnierunterteile 14 und 30 mit einem als gering einzustufenden Aufwand, d. h. mit einer geringen Betätigungskraft, relativ zueinander bewegt werden.

Der Aktor 44 muss somit die Kraft aufbringen, die nötig ist, um den Keil 52 aus dem Verbund hinaus zu ziehen und erst dann, zeitlich anschließend, die Kraft aufbringen, die nötig ist, um das Scharnierunterteil 14 relativ zu dem Scharnierunterteil 30 in die Fußgängerschutzstellung zu bewegen.

Auch bei dem Scharnier 10 gemäß den Figuren 6 und 7 ist somit eine Funktionstrennung zwischen dem Aufbringen einer Lösekraft zum Aufheben der Haltekraft zwischen den Scharnierunterteilen 14 und 30 und dem Aufbringen einer Aufstellkraft zum Bewegen der Scharnierunterteile 14 und 30 relativ zueinander realisiert. Damit weist auch das Scharnier 10 gemäß den Figuren 6 und 7 eine sehr gute Funktionserfüllung auch über eine hohe Lebensdauer hinweg auf. Auch bei dem Scharnier 10 gemäß den Figuren 6 und 7 sind die Scharnierunterteile 14 und 30 besonders fest gegeneinander zu fixieren und dennoch besonders günstig in die Schutzstellung zu bewegen, da die Scharnierunterteile 14 und 30 wie schon bei dem Scharnier 10 gemäß den Figuren 1 bis 5 mit einer besonders hohen Haltekraft miteinander zu verspannen sind, wobei zum Lösen dieser sehr hohen Haltekraft in einem Vergleich dazu sehr geringe Lösekraft durch den Aktor 44 aufgebracht werden muss.

Wie den Figuren 6 und 7 zu entnehmen ist, sind die Schraube 50 sowie die Mutter 54 auch in der Fußgängerschutzstellung des Scharniers 10 gemäß Fig. 7 im Scharnierunterteil 30 gehalten. Da sich das Scharnierunterteil 14 sowie der Keil 52 relativ zu dem Scharnierunterteil 30 bewegen, und um sich somit auch relativ zu der Schraube 50 in Fahrzeughochrichtung gemäß dem Richtungspfeil 42 nach oben bewegen zu können, weisen das Scharnierunterteil 14 sowie der Keil 52 jeweils einen Schlitz 58 bzw. 54 auf, welche sich jeweils an die Durchgangsöffnung anschließen, welche in der Normalstellung von der Schraube 50 durchdrungen ist. Mit anderen Worten kann die Schraube 50 über die Schlitze 54 und 58 in radialer Richtung der Schraube 50 aus den Durchgangsöffnungen heraustreten, da die Schlitze 54 und 58 entgegen der Bewegungsrichtung des Scharnierunterteils 14 sowie des Keils 42 nicht von einer Wandung begrenzt sind.

Vorteilhafterweise ist zumindest einer, bevorzugterweise beide, der beiden Schlitze 54 und 58 ausgehend von der Durchgangsöffnung in Richtung der Schraube 50 aufgeweitet ausgebildet, sodass ein problemloses Lösen sowohl des Scharnierunterteils 14 als auch des Keils 52 von der Schraube 50 in die Fußgängerschutzstellung gewährleistet ist. Dies vermeidet ein Verklemmen und kommt der Funktionserfüllung des Scharniers 10 zu Gute, was wiederum dem Fußgängerschutz zuträglich ist.

Die Fig. 8 bis 11 zeigen eine weitere Möglichkeit der im Zusammenhang mit den Scharnieren 10 gemäß den in den vorhergehenden Fig. 9 geschilderten Funktionstrennung der Aufbringung einer Lösekraft zum Lösen der gegenseitig fixierten Scharnierunterteile 14 und 30 von der Aufbringung einer Betätigungskraft zum Bewegen der Scharnierunterteile 14 und 30 relativ zueinander. Die Scharnierunterteile 14 und 30 des Scharniers 10 gemäß den Fig. 8 bis 11 sind in der in den Fig. 8 und 9 gezeigten Normalstellung mittels eines Schraubelements 56 gegenseitig fixiert und miteinander verspannt, wobei das Schraubelement 56 beispielsweise durch die Durchgangsöffnungen des Scharnierunterteils 30 sowie des Scharnierunterteils 14 durchdringt und über ein Gewinde des Schraubelements 56 mit einem Hebelelement 58 über ein Gewinde des Hebelelements 58 verschraubt ist. Mit anderen Worten sind die Scharnierunterteile 14 und 30 zwischen einem Kopf 60 des Schraubelements 56 und dem Hebelelement 58 analog zu der Schraube 50 und der Mutter 54 des Scharniers 10 gemäß Fig. 6 und 7 gegeneinander gedrückt und somit miteinander verspannt.

Sollen die Scharnierunterteile 14 und 30 nun in die in den Fig. 10 und 11 gezeigte Fußgängerschutzstellung bewegt werden, so wird der Aktor 44 aktiviert, welcher in Fahrzeughochrichtung gemäß dem Richtungspfeil 42 nach oben ausfährt. Die Aktor 44 trifft zunächst auf eine Anschlagsfläche 62 des Hebelelements 58 auf, was ein Verdrehen des Hebelelements 58 gemäß einem Richtungspfeil 64 relativ zu dem Schraubelement 56 bewirkt. Diese wenn auch nur geringe Verdrehung des Hebelelements 58 bewirkt eine Aufhebung oder zumindest eine deutliche Reduzierung einer zwischen den Scharnierunterteilen 14 und 30 wirkenden Haltekraft infolge deren Verspannung mittels des Schraubelements 56 und des Hebelelements 58, wodurch diese nach der Drehung des Hebelelements 58 leicht relativ zueinander bewegbar sind.

Zeitlich nach dem Betätigen des Hebelelements 58 trifft der Aktor 44 auf eine Anschlagsfläche 66 des Scharnierunterteils 14 auf, wodurch der Aktor 44 das Scharnierunterteil 66 mit einer geringen Betätigungskraft von der Normalstellung in die Fußgängerschutzstellung bewegen kann, und das zeitlich, nachdem die Haltekraft zwischen den Scharnierunterteilen 14 und 30 aufgehoben ist bzw. wurde. Somit sind auch bei dem Scharnier 10 gemäß den Fig. 8 bis 11 die Scharnierunterteile 14 und 30 besonders fest gegenseitig fixierbar und miteinander verspannbar, wobei trotz dieser festen Fixierung eine nur geringe Betätigungskraft vonnöten ist, um diese Fixierung betragsmäßig zu reduzieren oder gar ganz aufzuheben. Infolgedessen sind ebenso geringe Betätigungskräfte zur Bewegung der Scharnierunterteile 14 und 30 in die Fußgängerschutzstellung vonnöten, da lediglich eine Betätigungskraft zum Bewegen der Scharnierunterteile 14 und 30 jedoch nicht gleichzeitig eine Betätigungskraft zum Lösen der Fixierung aufzubringen ist.

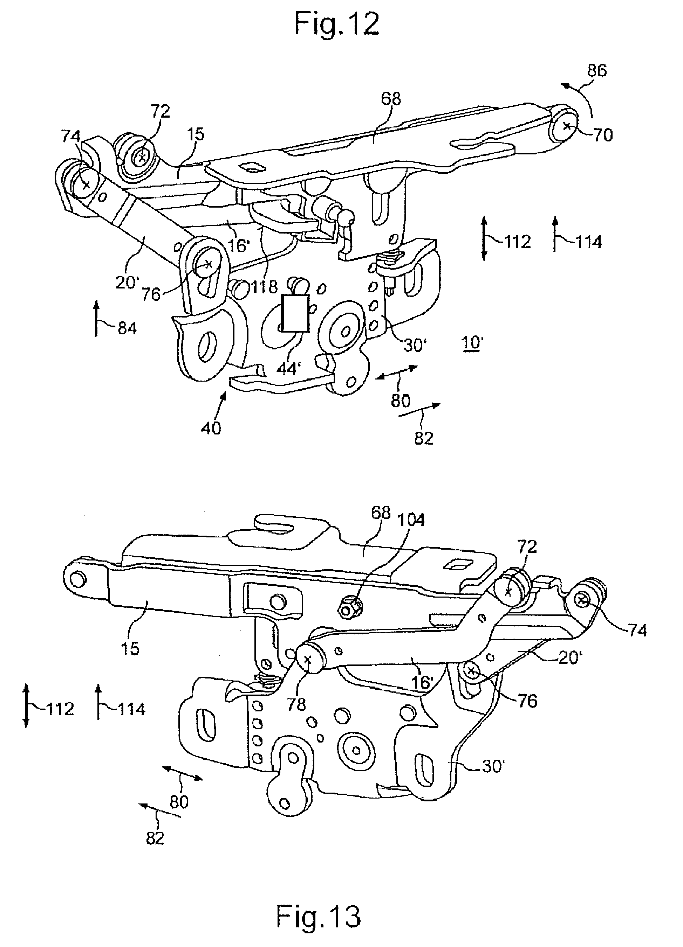

Die Fig. 12 bis 18 zeigen eine weitere Ausführungsform eines Scharniers 10' für eine Fronthaube eines Personenkraftwagens, wobei das Scharnier 10' ein mit der Fronthaube zu verbindendes Klappenteil 68 umfasst, welches mit der Fronthaube des Personenkraftwagens zu verbinden ist. Ferner umfasst das Scharnier 10' ein Scharnieroberteil 15, welches einenends um eine Drehachse 70 drehbar mit dem Klappenteil 68 verbunden ist. Andernends ist das Scharnieroberteil 15 mit einem Lenkerelement 16' um eine weitere Drehachse 72 drehbar verbunden, wobei das Lenkerelement 16' wiederum um eine weitere Drehachse 72 drehbar mit einem Scharnierunterteil 30' verbunden ist. Das Scharnierunterteil 30' ist dabei fest mit der Karosserie des Personenkraftwagens zu verbinden, wodurch die Fronthaube an der Karosserie bewegbar gehalten ist. Das Klappenteil 68 und das Scharnieroberteil 15 sind zwischen einer Normalstellung und einer Fußgängerschutzstellung relativ zueinander bewegbar.

Das Scharnieroberteil 15 ist des Weiteren um eine weitere Drehachse 74 drehbar mit einem weiteren Lenkerelement 20' verbunden, welches wiederum um eine Drehachse 78 drehbar mit dem Scharnierunterteil 30' verbunden ist. Wie insbesondere den Fig. 11 und 12 zu entnehmen ist, sind dabei die Drehachsen 72 und 74 in Fahrzeuglängsrichtung gemäß einem Richtungspfeil 80 wie auch die Drehachsen 76 und 78 in Fahrzeuglängsrichtung gemäß dem Richtungspfeil 80 voneinander beabstandet. Dies bedeutet, dass es sich bei dem Scharnier 10' um ein viergelenkiges Scharnier 10' handelt, wodurch die Fronthaube beim Öffnen in der Normalstellung des Klappenteils 68 und des Scharnieroberteils 15 dieser zunächst ein wenig nach vorne gemäß einem Richtungspfeil 82 sowie ein wenig nach oben gemäß einem Richtungspfeil 84 bewegbar und schließlich gemäß einem Richtungspfeil 86 nach hinten aufklappbar ist. Dies ergibt sich aus der Zwangskinematik des durch das Scharnieroberteil 15, das Scharnierunterteil 13' sowie die Lenkerelemente 16' und 20' gebildeten Viergelenks, wobei die Lenkerelemente 16' und 20' in Fahrzeuglängsrichtung gemäß dem Richtungspfeil 80 von vorne unten nach hinten oben ansteigend verlaufen und das Lenkerelement 16' eine größere Erstreckung, d. h. eine größere Länge, aufweist, als das Lenkerelement 20'.

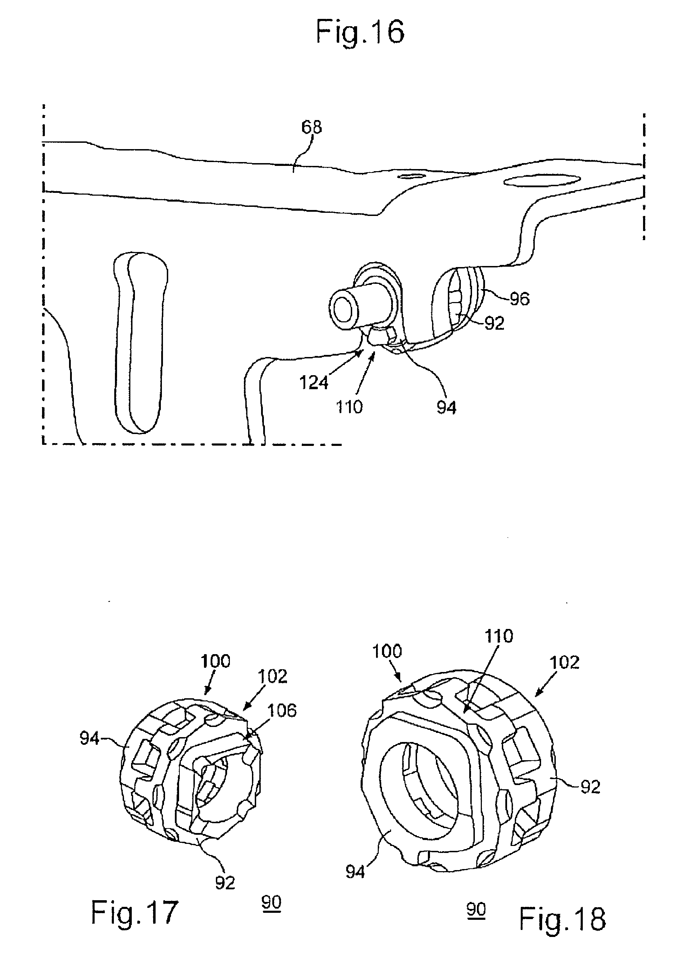

Das Scharnieroberteil 15 und das Klappenteil 68 sind in der in den Fig. 12 bis 15 gezeigten Normalstellung mittels einer Halteeinrichtung 88 unter Beaufschlagung einer Haltekraft zwischen dem Klappenteil 68 und dem Scharnieroberteil 15 gegeneinander besonders fest fixiert und miteinander verspannt, so dass diese in der Normalstellung gehalten sind. Die Haltekraft kann dabei in unterschiedliche Raumrichtungen gemäß Richtungspfeilen 126, welche in einer gemeinsamen Ebene liegen, wirken. Die Halteeinrichtung 88 umfasst dabei ein Halteelement 90 mit zwei Halteteilen 92 und 94, welche in den Fig. 17 und 18 vergrößert dargestellt sind. Ferner umfasst die Halteeinrichtung 88 eine Schraube 96. Das Scharnier 10 umfasst auch eine Betätigungseinrichtung 40' mit einem Mitnehmer 95. Zum Verspannen des Klappenteils 68 mit dem Scharnieroberteil 15 durchdringt die Schraube 96 eine Durchtrittsöffnung des Mitnehmers 95 sowie eine jeweilige Durchtrittsöffnung der Halteteile 92 und 94 sowie eine Durchtrittsöffnung des Klappenteils 68 und ist in ein zu einem Gewinde der Schraube 96 korrespondierendes und mit dem Scharnieroberteil 15 fest verbundenes Gewinde 104 eingeschraubt und festgezogen.

Das Gewinde 104 des Scharnieroberteils 14' muss dabei nicht zwangsläufig fest mit diesem verbunden sein. Es ist möglich, die Schraube 96 mittels eines entsprechenden Gegengewindes, beispielsweise mittels einer Mutter, zu kontern, um das Klappenteil 68 und das Scharnieroberteil 15 miteinander zu verspannen.

Durch Anziehen der Schraube 96 ist somit eine Haltekraft erzeugt, über welche das Klappenteil 68 mit dem Scharnieroberteil 15 verspannt ist und welche sich über einen Kopf 98 der Schraube 96 an dem Klappenteil 68 sowie über eine Klemmlänge K_{L} und das Gewinde des Scharnieroberteils 14' an dem Scharnieraberteil 15 abstützt. Mit anderen Worten ist durch das Klappenteil 68 und das Halteelement 90 die Klemmlänge K_{L} zum Verspannen des Klappenteils 68 mit dem Scharnieroberteil 15 dargestellt, wobei diese Klemmlänge K_{L} unter anderem durch jeweilige Verzahnungen 100 bzw. 102 der Halteteile 94 und 92 bereitgestellt ist. Dabei stützen sich Zähne der jeweiligen Verzahnung 100 und 102 in axialer Richtung der Schraube 96 gemäß einem Richtungspfeil 105 stirnseitig aneinander ab und befinden sich nicht im Eingriff miteinander.

Das Halteteil 92 weist eine Kontur 106 auf, welche zu einer entsprechenden Gegenkontur des Mitnehmers 95 korrespondiert, in welcher die Kontur 106 aufgenommen ist. Aufgrund der unrunden Form der Kontur 106 fungiert die Kontur 106 als Verdrehsicherung, wodurch das Halteteil 92 zwar separat von dem Mitnehmer 95 ausgebildet ist und in diesen eingesteckt werden kann, jedoch in eingestecktem Zustand drehfest an ihm abgestützt ist. Dies bedeutet, dass bei einem Drehen des Mitnehmers 95 gemäß einem Richtungspfeil 108, d. h. in Umfangsrichtung der Schraube 96, das Halteteil 92 mitgedreht wird.

Analoges gilt für das Halteteil 94, welches ebenso eine Kontur 110 aufweist, welche zu einer entsprechenden Gegenkontur des Klappenteils 68 korrespondiert. Die Kontur 110 ist somit in der Normalstellung in der korrespondieren Gegenkontur aufgenommen und fungiert ebenso als Verdrehsicherung, wodurch das Halteteil 94 auf einfache Art und Weise in die Gegenkontur ein- und ausgesteckt werden kann, jedoch in eingestecktem Zustand nicht verdreht werden kann.

Daraus ergibt sich, dass bei einer Drehung des Mitnehmers 94 gemäß dem Richtungspfeil 108 relativ zu dem Klappenteil 68 der Mitnehmer 94 das Halteteil 92 mitdreht, das Klappenteil 68 über die Gegenkontur und die Kontur 110 das Halteteil 94 demgegenüber jedoch festhält. Somit kommt es zu einer Relativverdrehung der Halteteile 92 und 94 und zu einer Relativverdrehung der entsprechenden Verzahnungen 100 und 102.

Im Falle einer unfallbedingten Kraftbeaufschlagung oder bei einer vorauserfassten und unvermeidbaren, unfallbedingten Kraftbeaufschlagung der Fronthaube bewegt sich ein in der Fig. 12 schematisch dargestellter Aktor 44' der Betätigungseinrichtung 40' des Scharniers 10' in Fahrzeughochrichtung gemäß einem Richtungspfeil 112 nach oben gemäß einem Richtungspfeil 114 und trifft zunächst auf eine Anschlagsfläche 116 des Mitnehmers 95 auf, welche eine Anschlagsfläche 118 der Betätigungseinrichtung 40' des Scharnieroberteils 14' in Fahrzeughochrichtung nach unten hin überragt. Dies bewirkt zunächst eine Drehung des Mitnehmers 95 in eine Drehrichtung gemäß einem Richtungspfeil 120, wodurch auch das Halteteil 92 entsprechend relativ zu dem Halteteil 94 gedreht wird. Ein Abstand zwischen der Anschlagsfläche 116 und der Anschlagsfläche 118 in Fahrzeughochrichtung ist dabei derart bemessen, dass der Mitnehmer 95 infolge der Betätigung durch den Aktor 44' soweit gedreht wird, bevor der Aktor 44 auf die Anschlagsfläche 118 auftrifft, so dass sich die Zähne der Verzahnungen 100 und 102 nicht mehr gegenüberstehen, sondern vielmehr die Zähne der Verzahnung 100 Zahnlücken der Verzahnung 102 und die Zähne der Verzahnung 102 Zahnlücken der Verzahnung 100 gegenüberstehen. Aufgrund der mittels der Schraube 96 aufgebrachten Haltekraft und der so dargestellten Verspannung des Klappenteils 68 mit dem Scharnieroberteil 15 kommt es zu einer Verkleinerung der Klemmlänge K_{L}, da sich die Halteteile 92 und 94 aufeinander zu bewegen und sich die Haltekraft nicht mehr nur über die Zähne der Verzahnung 100 und 102, sondern auch über jeweilige Gründe der Zahnlücken der Verzahnung 100 und 102 abgestützt wird. Dadurch ist ein Setzverhalten der Schraube 96 in großem Ausmaße realisiert, was zu einer Aufhebung der Haltekraft und damit zu einer Aufhebung der Verspannung des Klappenteils 68 mit dem Scharnieroberteil 15 führt. Dadurch sind das Klappenteil 68 und das Scharnieroberteil 15 relativ zueinander um die Drehachse 70 drehbar, wobei nur eine geringe Betätigungskraft vonnöten ist.

Diese Betätigungskraft wird von dem Aktor 44' auf das Scharnieroberteil 15 aufgebracht, da der Aktor zeitlich nach der Aufhebung der Haltekraft auf die Anschlagsfläche 118 auftrifft und somit das Scharnieroberteil 15 in Fahrzeughochrichtung gemäß dem Richtungspfeil 112 nach oben gemäß dem Richtungspfeil 114 drückt.

Wie schon zu den Scharnieren 10 gemäß den vorhergehenden Figuren geschildert, können das Klappenteil 68 und das Scharnieroberteil 15 mit einer sehr hohen Haltekraft gegenseitig fixiert und miteinander verspannt werden, wobei zur Aufhebung dieser Haltekraft bzw. Verspannung eine im Vergleich dazu geringe Betätigungskraft vonnöten ist. Im weiteren Verlauf der Betätigung des Scharniers 10 von der Normalstellung in eine Schutzstellung, in welcher das Körperteil 68 um die Drehachse 70 relativ zu dem Scharnierobertell 15 gegenüber der in den Fig. 12 bis 15 gezeigten Normalstellung verdreht ist, ist, ist nur noch eine geringe Betätigungskraft vonnöten, da bei der Bewegung selbst keine Verspannung bzw. Fixierung mehr gelöst werden muss.

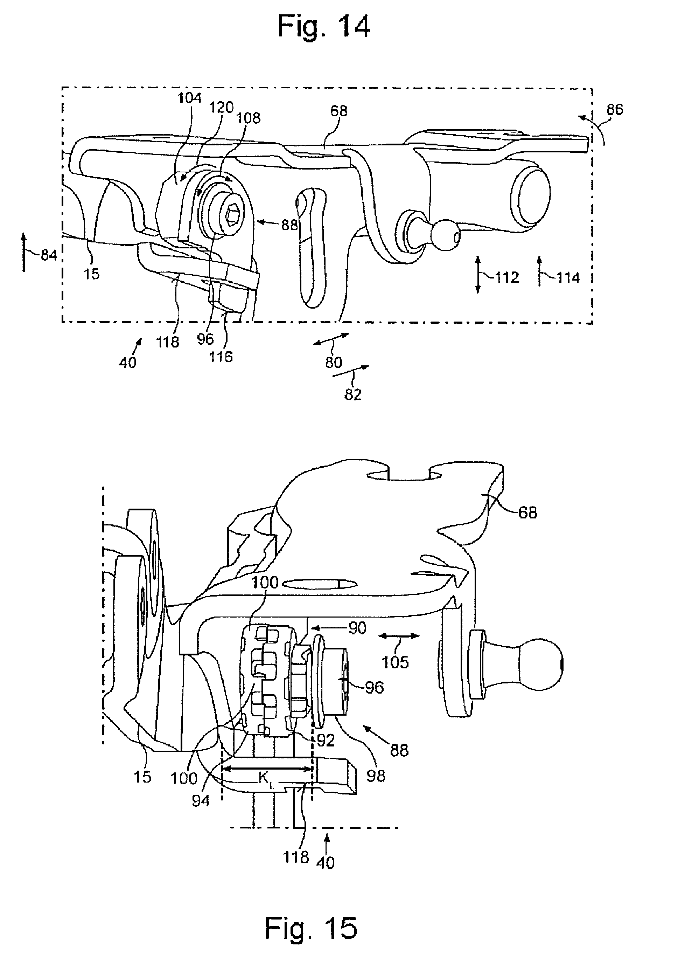

Wie insbesondere der Fig. 14 zu entnehmen ist, umfasst die Halteeinrichtung 88 eine Manschette 122, welche das Halteelement 90 und insbesondere die Verzahnungen 100 und 102 vor einem Verschmutzen und einem Verschleiß schützt.

Die Fig. 16 zeigt nicht nur deutlich die Kontur 110 des Halteteils 94. Der Fig. 16 ist auch zu entnehmen, dass sich an die zu der Kontur 110 korrespondierende Gegenkontur des Klappenteils 68 ein Schlitz 124 anschließt, über welchen das Halteteil 94 bzw. dessen Kontur 110 aus der korrespondierenden Gegenkontur austreten kann. Wie zuvor geschildert, durchdringt die Schraube 96 eine Durchgangsöffnung des Halteteils 94 und ist in das Gewinde 104 des Scharnieroberteils 14' eingeschraubt. Dies bedeutet, dass die Schraube 96 und damit das Halteteil 94 sowohl in der Normalstellung als auch in der Fußgängerschutzstellung an dem Scharnieroberteil 15 gehalten ist. Da sich jedoch das Klappenteil 68 von der Normalstellung in die Fußgängerschutzstellung relativ zu dem Scharnieroberteil 15 und somit auch relativ zu der Schraube 96 sowie zu dem Halteteil 94 bewegt, ist diese Relativbewegung bei Verbleib des Halteteils 94 in der Fußgängerschutzstellung an gleicher Stelle wie in der Normalstellung durch den Schlitz 124 ermöglicht. Da sich das Klappenteil 68 relativ zu dem Halteteil 94 nicht translatorisch bzw. rein translatorisch, sondern auch zumindest anteilig rotatorisch bewegt bei der Bewegung von der Normalstellung in die Fußgängerschutzstellung, ist der Schlitz ausgehend von der korrespondierenden Gegenkontur in Richtung, in welcher das Halteteil 94 aus der korrespondierenden Gegenkontur austritt, aufgeweitet ausgebildet, so dass ein Verklemmen zwischen dem Klappenteil 68 und dem Halteteil 94 vermieden ist und die Fußgängerschutzstellung schnell und problemlos bereitgestellt werden kann zur Realisierung eines sehr guten Fußgängerschutzes.

Da die Fronthaube des Personenkraftwagens zur stabilen Halterung an der Karosserie mittels eines in Querrichtung des Personenkraftwagens bezogen auf dessen Vorwärtsfahrtrichtung linksseitigen Scharnier 10' sowie mit einem rechtsseitigen Scharnier 10' an der Karosserie befestigt wird, wobei die beiden Scharniere 10` zumindest im Wesentlichen spiegelsymmetrisch zu der in Fahrzeughochrichtung gemäß dem Richtungspfeil 112 verlaufenden Mittelebene des Personenkraftwagens ausgebildet sind, ist es äußerst vorteilhaft, zur gegenseitigen Fixierung und Verspannung des Klappenteils 68 mit dem Scharnierobertell 15 mittels der Schraube 96 und dem Gewinde 104 auf Seiten des linksseitigen Scharniers 10' ein Gewinde 104 sowie ein Gewinde der Schraube 96 einzusetzen, wobei das Gewinde 104 auf Seiten des linksseitigen Scharniers 10' gegenläufig ausgebildet ist zu dem entsprechenden Gewinde 104 auf Seiten des rechtsseitigen Scharnier 10', und wobei das Gewinde der Schraube 96 des linksseitigen Scharniers 10' gegenläufig zu dem entsprechenden Gewinde der Schraube 96 des rechtsseitigen Scharniers 10' ausgebildet ist. Mit anderen Worten bedeutet dies, dass beispielsweise bei der Schraube 96 des linksseitigen Scharniers ein Rechtsgewinde eingesetzt wird, während bei der Schraube 96 des rechtsseitigen Scharniers ein Linksgewinde eingesetzt wird, um das entsprechende Klappenelement 68 mit dem korrespondieren Scharnieroberteil 15 zu verspannen.

Dadurch ist sowohl auf Seiten des linksseitigen Scharniers 10' wie auch auf Seiten des rechtsseitigen Scharniers 10' die unbeabsichtigten Aufhebung der Haltekraft zwischen den Klappenteil 68 und dem Scharnieroberteil 15 durch Verkleinerung der Klemmlänge K_{L} infolge der relativen Verdrehung der Verzahnungen 100 und 102 zueinander vermieden, da die jeweiligen Drehrichtungen der Schrauben 96 auf Seiten des linksseitigen Schar niers und auf Seiten des rechtsseitigen Scharniers zum gegenseitigen Verspannen des Klappenteils 68 mit dem Scharnierobertell 15 entgegengesetzt der Drehrichtung des jeweiligen Mitnehmers 94 verläuft und ein Drehen in eben diese unerwünschte Richtung durch den jeweiligen Absatz 122 des linksseitigen sowie des rechtsseitigen Scharniers 10' vermieden ist. Dabei ist beispielsweise das in den Fig. 12 bis 16 gezeigte Scharnier 10' als linksseitiges Scharnier 10' einsetzbar. Bei diesem linksseitigen Scharnier 10' weist die Drehrichtung zum Fixieren des Klappenteils 68 mit dem Scharnieroberteil 15 entgegen der Drehrichtung gemäß dem Richtungspfeil 120 und damit im Uhrzeigersinn, während die Drehrichtung zur Aufhebung der gegenseitigen Fixierung des Klappenteils 68 mit dem Scharnieroberteil 15 in die Drehrichtung gemäß dem Richtungspfeil 120 und damit entgegen dem Uhrzeigersinn weist. Übertragen auf ein entsprechendes rechtsseitiges Scharnier 10' bedeutet dies, dass bei dem rechtsseitigen Scharnier 10' die Drehrichtung zum Fixieren des Klappenteils 68 mit dem Scharnieroberteil 15 entgegen dem Uhrzeigersinn weist, während die Drehrichtung des entsprechenden Mitnehmers 94 zur Aufhebung der Fixierung des Klappenteils 68 mit dem Scharnieroberteil 15 in Uhrzeigersinn weist. So ist sowohl bei der Montage des linksseitigen Scharniers 10' als auch bei der Montage bei der Montage des rechtsseitigen Scharniers 10' eine unbeabsichtigte Aufhebung der gegenseitigen Fixierung des entsprechenden Klappenteils 68 mit dem entsprechenden Scharnieroberteil 15 vermieden.

In der Zusammenschau der Figuren 1 bis 18 wird deutlich, dass ohne weiteres auch anderweitige Möglichkeiten vorgesehen sein können, die Haltekraft zwischen den Schamierunterteilen 14 und 30 bzw. dem Klappenteil 68 und dem Scharnieroberteil 15 aufzuheben. So ist es beispielsweise möglich, die Haltekraft und damit die Fixierung durch Zerstören eines entsprechenden Halteelements, beispielsweise durch Abscheren der Schrauben 50 oder 56, aufzuheben, bevor die Bewegung der Scharnierunterteile 14 und 30 bzw. des Klappenteils 68 und des Scharnieroberteils 15 relativ zueinander erfolgt. In jeglicher Hinsicht ist eine Funktionstrennung realisiert, bei welcher sequentiell zunächst die Haltekraft aufgehoben und anschließend das Scharnier 10 bzw. 10' in die Fußgängerstellung verbracht wird. Für diese Funktionstrennung ist es auch unerheblich, ob das Scharnier 10 bzw. 10' vier- mehr- oder eingelenkig ausgebildet ist. Ebenso unerheblich ist, welche Anzahl an Scharnierteilen vorgesehen ist und welche dieser Scharnierteile relativ zueinander bewegbar sind zum Einnehmen der Fußgängerschutzstellung.

### Bezugszeichenliste

- 10, 10': Scharnier
- 12: Scharnierobertell
- 14: Scharnierunterteil
- 15: Scharnieroberteil
- 16, 16': Lenkerelement
- 18: Drehachse
- 20, 20': Lenkerelement
- 22: Drehachse
- 24: Richtungspfeil
- 26: Drehachse
- 28: Drehachse
- 30, 30': Scharnierunterteil
- 32: Drehachse
- 34: Halteeinrichtung
- 36: Klemme
- 38: Reibfläche
- 40, 40': Betätigungseinrichtung
- 42: Richtungspfeil
- 44, 44': Aktor
- 46: Hebel
- 48: Drehachse
- 50: Schraube
- 52: Keil
- 54: Mutter
- 56: Schlitz
- 58: Schlitz
- 60: Kopf
- 62: Anschlagsfläche
- 64: Richtungspfeil
- 66: Anschlagsfläche
- 68: Klappenteil
- 70: Drehachse
- 72: Drehachse
- 74: Drehachse
- 76: Drehachse
- 80: Richtungspfeil
- 82: Richtungspfeil
- 84: Richtungspfeil
- 86: Richtungspfeil
- 88: Halteeinrichtung
- 90: Halteelement
- 92: Halteteil
- 94: Halteteil
- 95: Mitnehmer
- 96: Schraube
- 98: Kopf
- 100: Verzahnung
- 102: Verzahnung
- 104: Gewinde
- 105: Richtungspfeil
- 106: Kontur
- 108: Richtungspfeil
- 110: Kontur
- 112: Richtungspfeil
- 114: Richtungspfeil
- 116: Anschlagsfläche
- 118: Anschlagsfläche
- 120: Richtungspfeil
- 124: Schlitz
- 126: Richtungspfeil
- 128: Richtungspfeil

## Patentansprüche

1. Scharnier (10, 10') für eine Fronthaube eines Kraftwagens, mit einem ersten Scharnierteil (12, 14, 15, 30, 30') und mit zumindest einem zweiten Scharnierteil (12, 14, 15, 30, 30'), welche gelenkig miteinander verbunden und zwischen einer Normalstellung und einer Schutzstellung relativ zueinander bewegbar sind, mit einer Halteeinrichtung (34, 88), mittels welcher die Scharnierteile (12, 14, 15, 30, 30') in der Normalstellung gehalten sind, und mit zumindest einer Betätigungseinrichtung (40), mittels welcher eine Bewegung der Scharnierteile (12, 14, 15. 30, 30') von der Normalstellung in die Schutzstellung bewirkbar ist, **dadurch gekennzeichnet, dass** die Scharnierteile (12, 14, 15, 30, 30') in der Normalstellung mittels der Halteeinrichtung (34, 88) unter Beaufschlagung mit einer Haltekraft (F_{H}) zwischen den Scharnierteilen (12, 14, 15, 30, 30') gegenseitig fixiert sind, wobei die Haltekraft (F_{H}) der Halteeinrichtung (34, 88) zwischen den Scharnierteilen (12, 14, 15, 30, 30') aufhebbar ist, bevor eine Bewegung der Scharnierteile (12,14. 95, 30, 30') relativ zueinander erfolgt.

2. Scharnier (10, 10') nach Anspruch 1, **dadurch gekennzeichnet, dass** die Scharnierteile (12, 14, 15, 30, 30') in der Normalstellung mittels der Halteeinrichtung (34, 88) durch eine kraftschlüssige Verbindung gegenseitig fixiert sind.

3. Scharnier (10, 10') nach einem der Ansprüche 1 oder 2, **dadurch gekennzeichnet, dass** die Scharnierteile (12, 14, 15, 30, 30') durch die Haltekraft (F_{H}) miteinander verspannt sind.

4. Scharnier (10, 10') nach einem der vorhergehenden Ansprüche,
**dadurch gekennzeichnet, dass** die Halteeinrichtung (34, 88) zumindest ein Halteelement (36, 90) umfasst, mittels welchem die Scharnierteile (12, 14, 15, 30, 30') in der Normalstellung gegenseitig fixiert sind.

5. Scharnier (10, 10') nach Anspruch 4, **dadurch gekennzeichnet, dass** das Halteelement (36, 90) als Schraubelement (50, 56, 96) ausgebildet ist, mittels welchem die Scharnierteile (12, 14, 15, 30, 30') in der Normalstellung gegenseitig fixiert sind.

6. Scharnier (10, 10') nach einem der Ansprüche 4 oder 5, **dadurch gekennzeichnet, dass** die Haltekraft (F_{H}) zumindest bezogen auf das Halteelement (36, 90) zerstörungsfrei aufhebbar ist.

7. Scharnier (10, 10') nach einem der Ansprüche 4 oder 5, **dadurch gekennzeichnet**, das die Haltekraft (F_{H}) durch Zerstören des Halteelements (36, 90) aufhebbar ist.

8. Scharnier (10, 10') nach einem der vorhergehenden Ansprüche, **dadurch gekennzeichnet, dass** die Haltekraft (F_{H}) durch Drehen der Halteeinrichtung (34, 88) aufhebbar ist.

9. Scharnier (10, 10') nach einem der vorhergehenden Ansprüche, **dadurch gekennzeichnet, dass** die Haltekraft (F_{H}) durch Bewegen relativ zueinander schief verlaufender Kontaktflächen relativ zueinander aufhebbar ist.

10. Scharnier (10, 10') nach einem der vorhergehenden Ansprüche, **dadurch gekennzeichnet, dass** die Haltekraft (F_{H}) durch Verkleinern einer Klemmlänge (K_{L} zur gegenseitigen Fixierung der Scharnierteile (12, 14, 15, 30, 30') in der Normalstellung aufhebbar ist.

11. Scharnier (10, 10') nach Anspruch 10, **dadurch gekennzeichnet, dass** die Haltekraft (F_{H}) durch Verdrehen zweier Verzahnungen (100, 102) relativ zueinander aufhebbar ist.

12. Scharnier (10, 10') nach einem der vorhergehenden Ansprüche, **dadurch gekennzeichnet, dass** zwischen den Scharnierteilen (12,14, 15, 30, 30') eine Reibung erhöhende Schicht (38) vorgesehen ist.

13. Scharnier (10, 10') nach einem der vorhergehenden Ansprüche, **dadurch gekennzeichnet, dass** die Haltekraft (F_{H}) der Halteeinrichtung (34, 88) zwischen den Scharnierteilen (12, 14, 15, 30, 30') mittels der Betätigungseinrichtung (40) aufhebbar ist, bevor die Bewegung der Scharnierteile (12, 14, 15, 30, 30') von der Normalstellung in die Schutzstellung mittels der Betätigungseinrichtung (40) erfolgt.

14. Scharnier (10, 10') nach einem der vorhergehenden Ansprüche, **dadurch gekennzeichnet, dass** die Betätigungseinrichtung (40) zumindest ein Stellglied (44, 44') umfasst, mittels welchem die Haltekraft (F_{H}) zunächst aufhebbar und zeitlich anschließend die Scharnierteile (12, 14, 15, 30, 30') in die Schutzstellung bewegbar sind.

15. Scharnier (10, 10') nach Anspruch 14, **dadurch gekennzeichnet, dass** das Stellglied (44, 44') als pyrotechnischer Aktor ausgebildet ist.

16. Verfahren zum Betätigen eines Scharniers (10, 10') für eine Fronthaube eines Kraftwagens, mit einem ersten Scharnierteil (12, 14, 15, 30, 30') und mit zumindest einem zweiten, mit dem ersten Scharnierteil (12, 14, 15, 30, 30') gelenkig verbundenen Scharnierteil (12, 14, 15, 30, 30'), welche zwischen einer Normalstellung und einer Schutzstellung relativ zueinander bewegbar sind, wobei die Scharnierteile (12, 14, 15, 30, 30') mittels einer Halteeinrichtung (34, 88) in der Normalstellung gehalten sind, bei welchem eine Bewegung der Scharnierteile (12, 14, 15, 30, 30') von der Normalstellung in die Schutzstellung mittels zumindest einer Betätigungseinrichtung (40) bewirkt wird, **dadurch gekennzeichnet, dass** eine Haltekraft (F_{H}) zwischen den Scharnierteilen (12, 14, 15, 30, 30'), unter deren Beaufschlagung die Scharnierteile (12, 14, 15, 30, 30') in der Normalstellung mittels der Halteeinrichtung (34, 88) gegenseitig fixiert sind, aufgehoben wird, bevor eine Bewegung der Scharnierteile (12, 14, 15, 30, 30') relativ zueinander erfolgt.

## Claims

1. A hinge (10, 10') for a motor-vehicle bonnet, comprising a first hinge part (12, 14, 15, 30, 30') and at least one second hinge art (12, 14, 15, 30, 30') pivotably connected together and movable relative to one another between a normal position and a safety position, comprising a retaining device (34, 88) whereby the hinge parts (12, 14, 15, 30, 30') are held in the normal position, and at least one actuating device (40) for moving the hinge parts (12, 14, 15, 30, 30') from the normal position to the safety position, **characterised in that** the hinge parts (12, 14, 15, 30, 30') are fixed to one another in the normal position by the retaining device (34, 88) under a retaining force (F_{H}) between the hinge parts (12, 14, 15, 30, 30'), wherein the retaining force (F_{H}) of the retaining device (34, 88) between the hinge parts (12, 14, 15, 30, 30') can be neutralised before the hinge parts (12, 14, 15, 30, 30') move relative to one another.

2. A hinge (10, 10') according to claim 1, **characterised in that** the hinge parts (12, 14, 15, 30, 30') are fixed to one another in the normal position by a non-positive connection made by the retaining device (34, 88).

3. A hinge (10, 10') according to claim 1 or claim 2, **characterised in that** the hinge parts (12, 14, 15, 30, 30') are clamped to one another by the retaining force (F_{H}).

4. A hinge (10, 10') according to any of the preceding claims, **characterised in that** the retaining device (34, 88) comprises at least one retaining element (36, 90) by means of which the hinge parts (12, 14, 15, 30, 30') are fixed together in the normal position.

5. A hinge (10, 10') according to claim 4, **characterised in that** the retaining element (36, 90) is a screwthreaded element (50, 56, 96) by means of which the hinge parts (12, 14, 15, 30, 30') are fixed to one another in the normal position.

6. A hinge (10, 10') according to claim 4 or claim 5, **characterised in that** the retaining force (F_{H}), at least relative to the retaining element (36, 90), can be neutralised without destruction.

7. A hinge (10, 10') according to claim 4 or claim 5, **characterised in that** the retaining force (F_{H}) can be neutralised by destroying the retaining element (36, 90).

8. A hinge (10, 10') according to any of the preceding claims, **characterised in that** the retaining force (F_{H}) can be neutralised by rotating the retaining device (34, 88).

9. A hinge (10, 10') according to any of the preceding claims, **characterised in that** the retaining force (F_{H}) can be neutralised by moving contact surfaces at an angle to one another, relative to one another.

10. A hinge (10, 10') according to any of the preceding claims, **characterised in that** the retaining force (F_{H}) can be neutralised by reducing a clamping length (K_{L}) for fixing the hinge parts (12, 14, 15, 30, 30') to one another in the normal position.

11. A hinge (10, 10') according to claim 10, **characterised in that** the retaining force (F_{H}) can be neutralised by rotating two sets of teeth (100, 102) relative to one another.

12. A hinge (10, 10') according to any of the preceding claims, **characterised in that** a friction-increasing layer (38) is provided between the hinge parts (12, 14, 15, 30, 30').

13. A hinge (10, 10') according to any of the preceding claims, **characterised in that** the retaining force (F_{H}) of the retaining device (34, 88) between the hinge parts (12, 14, 15, 30, 30') can be neutralised by the actuating device (40) before the hinge parts (12, 14, 15, 30, 30') are moved from the normal position to the safety position by the actuating device (40).

14. A hinge (10, 10') according to any of the preceding claims, **characterised in that** the actuating device (40) comprises at least one actuator (44, 44') by means of which the retaining force (F_{H}) can be neutralised before moving the hinge parts (12, 14, 15, 30, 30') into the safety position.

15. A hinge part (10, 10') according to claim 14, **characterised in that** the actuator (40, 44') is a pyrotechnic actuator.

16. A method of actuating a hinge (10, 10') for a motor-vehicle bonnet, comprising a first hinge part (12, 14, 15, 30, 30') and at least one second hinge part (12, 14, 15, 30, 30') pivotably connected to the first hinge part (12, 14, 15, 30, 30'), the parts being movable relative to one another between a normal position and a safety position, wherein the hinge parts (12, 14, 15, 30, 30') are held by a retaining device (34, 88) in the normal position at which the hinge parts (12, 14, 15, 30, 30') can be moved from the normal position to the safety position by at least one actuating device (40), **characterised in that** a retaining force (F_{H}) between the hinge parts (12, 14, 15, 30, 30') fixing the hinge parts (12, 14, 15, 30, 30') to one another in the normal position via the retaining device (34, 88) is neutralised before the hinge parts (12, 14, 15, 30, 30') move relative to one another.

## Revendications

1. Charnière (10, 10') de capot de véhicule automobile comportant
- une première partie de charnière (12, 14, 15, 30, 30') et une deuxième partie de charnière (12, 14, 15, 30, 30') reliées de manière articulée l'une à l'autre et mobiles l'une par rapport à l'autre entre une position normale et une position de protection,
- une installation de maintien (34, 88) qui maintient les parties de charnières (12, 14, 15, 30, 30') en position normale, et
- au moins une installation d'actionnement (40) qui produit le mouvement des parties de charnière (12, 14, 15, 30, 30') de la position normale à la position de protection,
**caractérisée en ce que**
les parties de charnière (12, 14, 15, 30, 30') sont fixées réciproquement dans la position normale par l'installation de maintien (34, 88) en les sollicitant par une force de maintien (F_{H}) exercée entre les parties de charnières (12, 14, 15, 30, 30'), et
la force de maintien (F_{H}) de l'installation de maintien (34, 88) exercée entre les parties de charnière (12, 14, 15, 30, 30') est neutralisée avant le mouvement des parties de charnière (12, 14, 15, 30, 30') l'une par rapport à l'autre.

2. Charnière (10, 10') selon la revendication 1,
**caractérisée en ce que**
les parties de charnière (12, 14, 15, 30, 30') sont fixées réciproquement en position normale par l'installation de maintien (34, 88) par une liaison par la force.

3. Charnière (10, 10') selon l'une des revendications 1 ou 2,
**caractérisée en ce que**
les parties de charnière (12, 14, 15, 30, 30') sont serrées l'une par rapport à l'autre par la force de maintien (F_{H}).

4. Charnière (10, 10') selon l'une des revendications précédentes,
**caractérisée en ce que**
l'installation de maintien (34, 88) comporte au moins un élément de maintien (36, 90) qui fixe réciproquement les parties de charnière (12, 14, 15, 30, 301 en position normale.

5. Charnière (10, 10') selon la revendication 4,
**caractérisée en ce que**
l'élément de maintien (36, 90) est réalisé sous la forme d'un élément à vis (50, 56, 96) qui fixe les parties de charnière (12, 14, 15, 30, 30') l'une par rapport à l'autre dans la position normale.

6. Charnière (10, 10') selon l'une des revendications 4 ou 5,
**caractérisée en ce que**
rapportée au moins à l'élément de maintien (36, 90), la force de maintien (F_{H}) peut être neutralisée sans destruction.

7. Charnière (10, 10') selon l'une des revendications 4 ou 5,
**caractérisée en ce que**
la force de maintien (F_{H}) se neutralise par la destruction de l'élément de maintien (36, 90).

8. Charnière (10, 10') selon l'une des revendications précédentes,
**caractérisée en ce que**
la force de maintien (F_{H}) se neutralise par la rotation de l'installation de maintien (34, 88).

9. Charnière (10, 10') selon l'une des revendications précédentes,
**caractérisée en ce que**
la force de maintien (F_{H}) se neutralise par le mouvement relatif de surfaces de contact en biais.

10. Charnière (10, 10') selon l'une des revendications précédentes,
**caractérisée en ce que**
la force de maintien (F_{H}) se neutralise par la réduction de la longueur de serrage (K_{L}) pour la fixation réciproque des parties de charnières (12, 14, 15, 30, 30') en position normale.

11. Charnière (10, 10') selon la revendication 10,
**caractérisée en ce que**
la force de maintien (F_{H}) se neutralise par la rotation de deux dentures (100, 102) l'une par rapport à l'autre.

12. Charnière (10, 10') selon l'une des revendications précédentes,
**caractérisée par**
une couche (38) augmentant le frottement entre les parties de charnière (12, 14, 15, 30, 30').

13. Charnière (10, 10') selon l'une des revendications précédentes,
**caractérisée en ce que**
la force de maintien (F_{H}) de l'installation de maintien (34, 88) exercée entre les parties de charnière (12, 14, 15, 30, 30') se neutralise par l'installation d'actionnement (40) avant que le mouvement des parties de charnière (12, 14, 15, 30, 30') ne les mette de la position normale à la position de protection par l'installation d'actionnement (40).

14. Charnière (10, 10') selon l'une des revendications précédentes,
**caractérisée en ce que**
l'installation d'actionnement (40) comporte au moins un organe de réglage (44, 44') qui permet tout d'abord de neutraliser la force de maintien (F_{H}) puis permet de déplacer les parties de charnière (12, 14, 15, 30, 30') dans la position de protection.

15. Charnière (10, 10') selon la revendication 14,
**caractérisée en ce que**
l'organe de réglage (44, 44') est un actionneur pyrotechnique.

16. Procédé d'actionnement d'une charnière (10, 10') du capot d'un véhicule automobile comprenant une première partie de charnière (12, 14, 15, 30, 30') et au moins une seconde partie de charnière (12, 14, 15, 30, 30') reliée de manière articulée à la première partie de charnière (12, 14, 15, 30, 30') et qui sont mobiles l'une par rapport à l'autre entre une position normale et une position de protection,
les parties de charnière (12, 14, 15, 30, 30') étant tenues en position normale par une installation de maintien (34, 88) dans laquelle au moins une installation d'actionnement (40), assure un mouvement des parties de charnière (12, 14, 15, 30, 30') de la position normale à la position de protection,
**caractérisé en ce qu'**
on neutralise la force de maintien (F_{H}) entre les parties de charnière (12, 14, 15, 30, 30') qui fixe réciproquement les parties de charnière (12, 14, 15, 30, 30') en position normale par l'installation de maintien (34, 88) avant le mouvement des parties de charnière (12, 14, 15, 30, 30') l'une par rapport à l'autre.
